# EUROPÄISCHE PATENTSCHRIFT

(11) **EP 3 746 246 B1**
(45) Veröffentlichungstag und Bekanntmachung des Hinweises auf die Patenterteilung: **04.08.2021**
(21) Anmeldenummer: 19706442.1
(22) Anmeldetag: 13.02.2019
(51) Int. Cl.: B23B 31/40, B23C 3/05, B23B 5/06, B23B 31/30, B23B 51/10

(54) **KOMBINATIONSWERKZEUG UND WERKZEUGHALTER FÜR EIN KOMBINATIONSWERKZEUG**
COMBINATION TOOL AND TOOL HOLDER FOR A COMBINATION TOOL
OUTIL COMBINÉ ET PORTE-OUTIL POUR UN OUTIL COMBINÉ

(30) Priorität: 09.03.2018 DE 102018105519
(43) Veröffentlichungstag der Anmeldung: 09.12.2020
(73) Patentinhaber: KYOCERA UNIMERCO TOOLING A/S, 7451 Sunds (DK)
(72) Erfinder: PANKALLA, Sven, 56140 Huskvarna (SE); SVENSSON, Anders, 56196 Lekeryd (SE)
(74) Vertreter: Viering, Jentschura & Partner mbB Patent- und Rechtsanwälte
(86) Internationale Anmeldenummer: PCT/EP2019/053582
(87) Internationale Veröffentlichungsnummer: WO 2019/170378

(56) Entgegenhaltungen:
- EP-A1- 3 045 244
- EP-A2- 2 260 959
- DE-A1-102006 016 290
- US-B1- 6 179 530

## Beschreibung

Die Erfindung betrifft ein Kombinationswerkzeug und einen Werkzeughalter für ein Kombinationswerkzeug gemäß dem Oberbegriff des Anspruchs 1 bzw. des Anspruchs 8.

Solche Kombinationswerkzeug und Werkzeughalter sind z.B. aus der DE 10 2006 016 290 A bekannt.

Ein Kombinationswerkzeug ist ebenfalls aus der WO 03/013771 A1 bekannt.

Durch die Erfindung wird ein Kombinationswerkzeug gemäß dem Anspruch 1 geschaffen, welches die gleichzeitige spanende Bearbeitung zweier zueinander koaxialer Lochbereiche durch zwei Spanwerkzeuge mit hoher Bearbeitungsgenauigkeit ermöglicht, wobei die beiden Spanwerkzeuge einfach austauschbar sind. Durch die Erfindung wird ferner ein Werkzeughalter für ein Kombinationswerkzeug geschaffen, von dem gleichzeitig zwei spanende Werkzeuge gehalten werden können, wobei die Spanwerkzeuge leicht austauschbar sind und dennoch eine Spanbearbeitung mit hoher Präzession ermöglicht ist.

Die Erfindung stellt bereit ein Kombinationswerkzeug mit einem Werkzeughalter, der sich entlang einer Werkzeugdrehachse erstreckt, die eine axiale Erstreckung definiert, einem inneren (z.B. zentralen) Spanwerkzeug zum spanenden Bearbeiten eines ersten, zentralen Lochbereichs und einem äußeren, hülsenförmigen Spanwerkzeug zum spanenden Bearbeiten eines bezüglich des ersten Lochbereichs radial äußeren, zweiten Lochbereichs, wobei der Werkzeughalter einen freien, axialen Werkzeugaufnahme-Endabschnitt aufweist, der ein zentrales (und z.B. sich axial erstreckendes) Werkzeugaufnahme-Loch zur Aufnahme des inneren Spanwerkzeugs und eine das zentrale Werkzeugaufnahme-Loch umgebende (z.B. koaxial umgebende) Werkzeugaufnahme-Umfangsfläche (z.B. Werkzeugaufnahme-Außenumfangsfläche) zur (z.B. darauf) Aufnahme des äußeren Spanwerkzeugs hat, sodass sich der Werkzeugaufnahme-Endabschnitt bei davon aufgenommenem inneren und äußeren Spanwerkzeug radial zwischen dem inneren und dem äußeren Spanwerkzeug erstreckt, wobei im Werkzeugaufnahme-Endabschnitt eine Hydraulikkammer ausgebildet ist, in welcher eine variabel unter Hydraulikdruck setzbare Hydraulikflüssigkeit aufgenommen ist, und wobei der Werkzeugaufnahme-Endabschnitt eine äußere, elastisch radial nach außen auslenkbare Klemmwand und eine innere, elastisch radial nach innen auslenkbare Klemmwand aufweist, welche die Hydraulikkammer abschnittsweise (, z.B. radial) begrenzen, sodass durch Erhöhen des Hydraulikdrucks in der Hydraulikkammer sowohl die äußere Klemmwand (radial) nach außen elastisch auslenkbar ist, um eine (radiale) Klemmkraft gegen das aufgenommene äußere Spanwerkzeug auszuüben, mittels deren das äußere Spanwerkzeug an den Werkzeughalter klemmbar ist, als auch die innere Klemmwand (radial) nach innen elastisch auslenkbar ist, um eine (radiale) Klemmkraft gegen das aufgenommene innere Spanwerkzeug auszuüben, mittels deren das innere Spanwerkzeug an den Werkzeughalter klemmbar ist.

Die Hydraulikkammer weist ferner einen zweiten, äußeren Hydraulikkammer-Abschnitt auf, der in einem sich an einen oder den freien axialen Endabschnitt axial (in Richtung zu der Antriebsseite) anschließenden Abschnitt des Werkzeugaufnahme-Endabschnitts des Werkzeughalters ausgebildet ist und der ringförmig ausgebildet ist und die Werkzeugdrehachse umgibt (z.B. koaxial umgibt) und der radial nach außen von einem zweiten äußeren (z.B. ringförmigen) Umfangs-Klemmwandabschnitt (z.B. Außenumfangs-Klemmwandabschnitt) der äußeren Klemmwand begrenzt wird, und die Hydraulikkammer weist einen zweiten, inneren Hydraulikkammer-Abschnitt auf, der (ebenfalls) in dem sich an den freien axialen Endabschnitt axial anschließenden Abschnitt des Werkzeugaufnahme-Endabschnitts des Werkzeughalters ausgebildet ist, optional axial auf Höhe des zweiten äußeren Hydraulikkammer-Abschnitt ausgebildet ist, und der ringförmig ausgebildet ist und die Werkzeugdrehachse umgibt (z.B. koaxial umgibt) und der radial nach innen von einem zweiten inneren (z.B. ringförmigen) Umfangs-Klemmwandabschnitt (z.B. Innenumfangs-Klemmwandabschnitt) der inneren Klemmwand begrenzt wird, wobei sich radial zwischen dem zweiten, äußeren Hydraulikkammer-Abschnitt und dem zweiten, inneren Hydraulikkammer-Abschnitt eine Ringwand des Werkzeugaufnahme-Endabschnitts erstreckt, von welcher die von dem zweiten äußeren Umfangs-Klemmwandabschnitt gegen das aufgenommene äußere Spanwerkzeug ausgeübte Klemmkraft und die von dem zweiten inneren Umfangs-Klemmwandabschnitt gegen das innere Spanwerkzeug ausgeübte Klemmkraft gegenaufnehmbar (d.h. zumindest im Wesentlichen gegenaufnehmbar) sind.

Die Angabe "radial" bedeutet "radial bezüglich der Werkzeugdrehachse", und die Angabe "axial" bedeutet "in Richtung der Werkzeugdrehachse".

Aufgrund der hydraulischen Halterung sind die beiden Spanwerkzeuge schnell wechselbar, indem einfach der hydraulische Druck abgesenkt wird, wodurch die Klemmwände aufgrund deren elastischen Rückstellkraft wieder in ihre nicht-ausgelenkte Stellung zurückkehren und dadurch die Spanwerkzeuge freigeben. Entsprechend umgekehrt gilt dies für die Wiederfestlegung der am Werkzeughalter aufgenommenen beiden Spanwerkzeuge. Ferner können durch die Hydraulikhalterung in einfacher Weise sehr hohe Klemmkräfte erzeugt werden, wodurch die beiden Spanwerkzeuge sehr fest am Werkzeughalter festgelegt werden können, was zu einer hohen Bearbeitungsgenauigkeit beiträgt. Zudem kann das Kombinationswerkzeug relativ einfach aufgebaut werden, und ist z.B. mit nur drei separaten Haupt-Bauteilen, nämlich dem Werkzeughalter und den beiden Spanwerkzeugen, bereitstellbar.

Der Werkzeughalter weist z.B. einen zu dem Werkzeugaufnahme-Endabschnitt axial entgegengesetzten Antriebsaufnahme-Endabschnitt auf, welcher einen Antriebsaufnahme-Kupplungsteil aufweist, der derart ausgebildet ist, dass er bezüglich der Werkzeugdrehachse in form- und/oder kraftschlüssiger Weise drehfest mit einem Antriebskupplungsteil eines Drehantriebs verbindbar ist.

Die innere Klammwand kann ringförmig ausgebildet sein und kann die Werkzeugdrehachse koaxial umgeben, und die äußere Klemmwand kann ringförmig ausgebildet sein und die Werkzeugdrehachse koaxial umgeben.

Die Hydraulikkammer kann einen ersten Hydraulikkammer-Abschnitt haben, der in einem freien (d.h. von der Antriebsseite abgewandten) axialen Endabschnitt des Werkzeugaufnahme-Endabschnitts des Werkzeughalters ausgebildet ist und der ringförmig ausgebildet ist und die Werkzeugdrehachse umgibt (z.B. koaxial umgibt) und der radial nach außen von einem ersten äußeren (z.B. ringförmigen) Umfangs-Klemmwandabschnitt der äußeren Klemmwand begrenzt wird und der radial nach innen von einem ersten inneren (z.B. ringförmigen) Umfangs-Klemmwandabschnitt der inneren Klemmwand begrenzt wird, sodass die von dem ersten äußeren Umfangs-Klemmwandabschnitt und von dem ersten inneren Umfangs-Klemmwandabschnitt ausgeübte Klemmkraft durch die im ersten Hydraulikkammer-Abschnitt vorliegende Hydraulikflüssigkeit radial zwischen dem ersten äußeren und dem ersten inneren Umfangs-Klemmwandabschnitt übertragen wird. (Hierbei wird von dem ersten äußeren Umfangs-Klemmwandabschnitt die Klemmkraft radial nach außen hin ausgeübt, und von dem ersten inneren Umfangs-Klemmwandabschnitt wird die Klemmkraft radial nach innen hin ausgeübt.)

Die jeweiligen ersten und zweiten Umfangs-Klemmwandabschnitte erstrecken sich z.B. jeweils koaxial um die Werkzeugdrehachse.

Die radiale, elastische Nachgiebigkeit des zweiten äußeren Umfangs-Klemmwandabschnitts kann größer sein als die radiale, elastische Nachgiebigkeit des ersten äußeren Umfangs-Klemmwandabschnitts, sodass auf Basis eines gleichen hydraulischen Drucks die von dem zweiten äußeren Umfangs-Klemmwandabschnitt ausgeübte Klemmkraft größer ist als die von dem ersten äußeren Umfangs-Klemmwandabschnitt ausgeübte Klemmkraft. Indem dadurch am freien Endabschnitt die auf das äußere Spanwerkzeug des Werkzeughalters ausgeübten Klemmkräfte verringert sind, ist z.B. die Gefahr reduziert, dass spanende Schneiden des äußeren Spanwerkzeugs, die z.B. auf axialer Höhe des freien Endabschnitts des Werkzeughalters angeordnet sind, von der Klemmkraft des ersten äußeren Umfangs-Klemmwandabschnitts in ihrer Stellung und/oder Position beeinflusst werden. Dies kann zu einer weiter verbesserten Bearbeitungsgenauigkeit beitragen. Die feste Halterung bleibt dennoch erhalten, weil durch den zweiten äußeren Umfangs-Klemmwandabschnitt und z.B. auch durch die beiden inneren Umfangs-Klemmwandabschnitte demgegenüber erhöhte Klemmkräfte ausgeübt werden bzw. ausgeübt werden können.

Der erste äußere Umfangs-Klemmwandabschnitt kann eine radiale Wandstärke haben, die größer ist als die radiale Wandstärke des zweiten äußeren Umfangs-Klemmwandabschnitts. Hierdurch kann z.B. erreicht werden, dass die radiale Nachgiebigkeit des zweiten äußeren Umfangs-Klemmwandabschnitts größer ist als die radiale Nachgiebigkeit des ersten äußeren Umfangs-Klemmwandabschnitts.

Die Hydraulikkammer kann einen Druckkammer-Abschnitt aufweisen, welcher von einem bewegbaren Kolben begrenzt wird, durch dessen Bewegung das Volumen der Hydraulikkammer zum entsprechenden Erhöhen und Erniedrigen des Hydraulikdrucks in der Hydraulikkammer variierbar ist.

Der bewegbare Kolben kann von einer Schraube, optional von einer Madenschraube, gebildet ist, welche in den Druckkammer-Abschnitt einschraubbar ist. Hierdurch kann z.B. durch einfaches manuelles Drehen der Schraube der Hydraulikdruck in der Hydraulikkammer erhöht und erniedrigt werden, wodurch die beiden Spanwerkzeuge in einfacher Weise manuell am Werkzeughalter festlegbar und davon lösbar sind. Die Madenschraube kann, z.B. an ihrem Stirnende, mit einem Dichtungselement, z.B. einem Kunststoffdichtungselement, versehen sein, um durch dieses eine, z.B. verbesserte, Kolbenabdichtung gegen die Innenwandung des Druckkammer-Abschnitts zu erzielen.

Der Druckkammer-Abschnitt kann über einen ersten (z.B. im Werkzeughalter ausgebildeten) Verbindungskanal mit dem zweiten, inneren Hydraulikkammer-Abschnitt hydraulisch verbunden sein (d.h. fluidverbunden sein), und der Druckkammer-Abschnitt kann über einen zweiten, von dem ersten Verbindungskanal verschiedenen (und z.B. im Werkzeughalter ausgebildeten) Verbindungskanal mit dem zweiten, äußeren Hydraulikkammer-Abschnitt hydraulisch verbunden sein.

Der erste Hydraulikkammer-Abschnitt kann unmittelbar mit dem zweiten, inneren Hydraulikkammer-Abschnitt hydraulisch verbunden sein (und sich z.B. axial an diesen (hydraulisch) anschließen) ist und kann z.B. nur mittelbar, z.B. über den Druckkammer-Abschnitt, mit dem zweiten, äußeren Hydraulikkammer-Abschnitt verbunden sein.

Der zweite, äußere Hydraulikkammer-Abschnitt kann sich radial weiter außen erstrecken (bezüglich der Werkzeugdrehachse) als der erste Hydraulikkammer-Abschnitt. D.h., der zweite, äußere Hydraulikkammer-Abschnitt kann sich z.B. ringförmig (und z.B. koaxial) mit einem größeren Durchmesser um die Werkzeugdrehachse herumerstrecken als der erste Hydraulikkammer-Abschnitt. Dies erlaubt es, dass das äußere Spanwerkzeug auf axialer Höhe der zweiten Hydraulikkammer-Abschnitte mit einem größeren Durchmesser ausgebildet werden/sein kann als auf axialer Höhe des ersten Hydraulikkammer-Abschnitts, sodass es (axial in etwa auf Höhe des ersten Hydraulikkammer-Abschnitts oder axial in etwa zwischen dem ersten und den beiden zweiten Hydraulikkammer-Abschnitten) eine Axialschulter aufweisen kann, auf welcher stirnendseitige, spanende Schneiden angeordnet werden/sein können, welche z.B. auf axialer Höhe des ersten Hydraulikkammer-Abschnitts angeordnet sind. Mit solchen stirnendseitigen Schneiden kann mit dem äußeren Spanwerkzeug z.B. stirnseitig Material spanend bearbeitet werden.

Das äußere Spanwerkzeug kann (generell) mit einer Anzahl (z.B. 2 oder 3 oder mehr) von spanenden Schneiden ausgestattet sein, die bei aufgenommenem äußerem Spanwerkzeug axial auf Höhe des ersten Hydraulikkammer-Abschnitts angeordnet sind. Das äußere Spanwerkzeug kann z.B. einen Schneiden-Träger aufweisen, an dem eine Innenumfangsfläche des äußeren Spanwerkzeugs zum Aufliegen/Sitzen auf der Werkzeugaufnahme-Umfangsfläche des Werkzeugaufnahme-Endabschnitts des Werkzeughalters ausgebildet ist, und die Schneiden können an dem Schneiden-Träger fest vorgesehen sein, wobei die Schneiden z.B. stofflich einstückig mit dem Schneiden-Träger ausgebildet sein können oder aber aus einem anderen Material als der Schneiden-Träger ausgebildet und an diesem festgelegt sein können. Die Schneiden des äußeren Spanwerkzeugs können z.B. aus PCD (Polykristallinem Diamant), Hartmetall mit Beschichtung (z.B. Beschichtung aus DLCm OVD oder CCD), Hartmetall ohne Beschichtung, pCBN (Polykristallinem Bornitrid) oder Cermet sein.

Das innere Spanwerkzeug kann z.B. ein Bohrer mit z.B. stirnseitigen Schneiden und/oder eine Reibahle mit z.B. an einer Umfangsfläche des inneren Spanwerkzeugs angeordneten Schneiden sein.

Das äußere Spanwerkzeug kann, wenn von dem Werkzeughalter aufgenommen, auf axialer Höhe mit dem zweiten, äußeren Hydraulikkammer-Abschnitt frei von spanenden Schneiden sein. Hierdurch kann z.B. eine negative Auswirkung der Klemmkraft, die durch den zweiten äußeren und den zweiten inneren Umfangs-Klemmwandabschnitt ausgeübt wird und die z.B. größer ist als die von dem ersten äußeren und dem ersten inneren Umfangs-Klemmwandabschnitt ausgeübte Klemmkraft, auf die Position und/oder Stellung von spanenden Schneiden des äußeren Spanwerkzeugs (die dann auf axialer Höhe der ersten Umfangs-Klemmwandabschnitte angeordnet sind) zumindest verringert oder sogar vermieden werden.

Das äußere Spanwerkzeug kann mit einem axialen Vorsprung oder einer axialen Aussparung versehen sein, wobei der Werkzeughalter (dazu korrespondierend) versehen sein kann mit einer axialen Aussparung zum formschlüssigen In-Eingriff-Stehen mit dem axialen Vorsprung des aufgenommenen äußeren Spanwerkzeugs oder mit einem axialen Vorsprung zum formschlüssigen In-Eingriff-Stehen mit der axialen Aussparung des aufgenommenen äußeren Spanwerkzeugs, um jeweils die Übertragung eines Drehmoments von dem Werkzeughalter auf das äußere Spanwerkzeug um die Werkzeugdrehachse zumindest zu unterstützen.

Die radiale Dicke der ersten Hydraulikkammer kann größer sein als die radiale Dicke der zweiten, äußeren Hydraulikkammer und/oder als die radiale Dicke der zweiten, inneren Hydraulikkammer. D.h., der radiale Abstand zwischen dem ersten inneren und dem ersten äußeren Umfangs-Klemmwandabschnitt, welche sich radial gegenüberliegen und die erste Hydraulikkammer radial begrenzen, kann größer sein als der radiale Abstand zwischen dem zweiten inneren Umfangs-Klemmwandabschnitt und dem diesem radial außen gegenüberliegenden Innenumfangswandabschnitt der Ringwand und/oder kann größer sein als der radiale Abstand zwischen dem zweiten äußeren Umfangs-Klemmwandabschnitt und dem diesem radial innen gegenüberliegenden Außenumfangswandabschnitt der Ringwand.

Durch z.B. diese größere radiale Dicke der ersten Hydraulikkammer und/oder z.B. durch die größere Nachgiebigkeit des ersten äußeren Umfangs-Klemmwandabschnitts kann/können z.B. Vibrationen des ersten und des äußeren Spanwerkzeugs abgemildert werden.

Der Werkzeughalter kann in dem Werkzeugaufnahme-Loch einen Axialanschlag aufweisen, gegen welchen das aufgenommene innere Spanwerkzeug axial anschlagen kann, so dass eine axiale Verschiebbarkeit des inneren Spanwerkzeugs in Richtung in das Werkzeugaufnahme-Loch von dem Axialanschlag begrenzt ist.

Der Axialanschlag kann axial verstellbar ausgebildet sein, wobei optional der Axialanschlag als axial verstellbare Schraube, optional als axial verstellbare Madenschraube ausgebildet ist, die axial in das Werkzeugaufnahme-Loch des Werkzeughalters einschraubbar ist.

Es kann z.B. eine Verwendung eines wie in dieser Anmeldung beschriebenen Kombinationswerkzeugs zur Bearbeitung, optional zur gleichzeitigen Bearbeitung, eines zentralen Lochs zur Aufnahme einer Ventilführungshülse und einer dazu koaxialen und radial äußeren Ausnehmung zur Aufnahme eines Ventilsitzrings in einem Zylinderkopf vorgesehen sein. Die Bearbeitung des zentralen Lochs und/oder die Bearbeitung der äußeren Ausnehmung umfassen hierbei jeweils ein Nachbearbeiten eines bereits bestehenden Lochs sowie auch das Erstellen (z.B. Bohren) des zentralen Lochs bzw. der äußeren Ausnehmung im Zylinderkopf.

Es kann ferner z.B. eine Verwendung eines wie in dieser Anmeldung beschriebenen Kombinationswerkzeugs zur Bearbeitung, optional zur gleichzeitigen Bearbeitung, einer Ventilführungshülse und eines Ventilsitzrings in einem Zylinderkopf vorgesehen sein.

Die Erfindung stellt ferner bereit einen Werkzeughalter, gemäß dem Anspruch 8, für ein wie in dieser Anmeldung beschriebenes Kombinationswerkzeug, wobei der Werkzeughalter sich entlang einer Werkzeugdrehachse erstreckt, die eine axiale Erstreckung definiert, und der Werkzeughalter einen freien, axialen Werkzeugaufnahme-Endabschnitt aufweist, der ein zentrales Werkzeugaufnahme-Loch zur Aufnahme eines inneren (z.B. zentralen) Spanwerkzeugs und eine das zentrale Werkzeugaufnahme-Loch (z.B. koaxial) umgebende Werkzeugaufnahme-Umfangsfläche zur Aufnahme eines äußeren Spanwerkzeugs hat, sodass sich der Werkzeugaufnahme-Endabschnitt bei davon aufgenommenem inneren und äußeren Spanwerkzeug radial zwischen dem inneren und dem äußeren Spanwerkzeug erstreckt, wobei im Werkzeugaufnahme-Endabschnitt eine Hydraulikkammer ausgebildet ist, in welcher eine variabel unter Hydraulikdruck setzbare Hydraulikflüssigkeit aufgenommen ist, und wobei der Werkzeugaufnahme-Endabschnitt eine äußere, elastisch radial nach außen auslenkbare Klemmwand und eine innere, elastisch radial nach innen auslenkbare Klemmwand aufweist, welche die Hydraulikkammer abschnittsweise begrenzen, sodass durch Erhöhen des Hydraulikdrucks in der Hydraulikkammer sowohl die äußere Klemmwand (radial) nach außen elastisch auslenkbar ist, um eine (radiale) Klemmkraft gegen das aufgenommene äußere Spanwerkzeug auszuüben, mittels deren das äußere Spanwerkzeug an den Werkzeughalter klemmbar ist, als auch die innere Klemmwand (radial) nach innen elastisch auslenkbar ist, um eine (radiale) Klemmkraft gegen das aufgenommene innere Spanwerkzeug auszuüben, mittels deren das innere Spanwerkzeug an den Werkzeughalter klemmbar ist, wobei die Hydraulikkammer einen ersten Hydraulikkammer-Abschnitt hat, der in einem freien (d.h. von einer Antriebsseite axial abgewandten) axialen Endabschnitt des Werkzeugaufnahme-Endabschnitts des Werkzeughalters ausgebildet ist und der ringförmig ausgebildet ist und die Werkzeugdrehachse (z.B. koaxial) umgibt und der radial nach außen von einem ersten äußeren Umfangs-Klemmwandabschnitt der äußeren Klemmwand begrenzt wird und der radial nach innen von einem ersten inneren Umfangs-Klemmwandabschnitt der inneren Klemmwand begrenzt wird, sodass die von dem ersten äußeren Umfangs-Klemmwandabschnitt und von dem ersten inneren Umfangs-Klemmwandabschnitt erzeugte Klemmkraft durch die im ersten Hydraulikkammer-Abschnitt vorliegende Hydraulikflüssigkeit radial zwischen dem ersten äußeren und dem ersten inneren Umfangs-Klemmwandabschnitt übertragen wird, und wobei die Hydraulikkammer einen zweiten, äußeren Hydraulikkammer-Abschnitt aufweist, der in einem sich an den freien axialen Endabschnitt axial anschließenden Abschnitt des Werkzeugaufnahme-Endabschnitts des Werkzeughalters ausgebildet ist und der ringförmig ausgebildet ist und die Werkzeugdrehachse (z.B. koaxial) umgibt und der radial nach außen von einem zweiten äußeren Umfangs-Klemmwandabschnitt der äußeren Klemmwand begrenzt wird, und wobei die Hydraulikkammer einen zweiten, inneren Hydraulikkammer-Abschnitt aufweist, der in dem sich an den freien axialen Endabschnitt axial anschließenden Abschnitt des Werkzeugaufnahme-Endabschnitts des Werkzeughalters ausgebildet ist, optional axial auf Höhe des zweiten äußeren Hydraulikkammer-Abschnitt ausgebildet ist, und der ringförmig ausgebildet ist und die Werkzeugdrehachse (z.B. koaxial) umgibt und der radial nach innen von einem zweiten inneren Umfangs-Klemmwandabschnitt der inneren Klemmwand begrenzt wird, wobei sich radial zwischen dem zweiten, äußeren Hydraulikkammer-Abschnitt und dem zweiten, inneren Hydraulikkammer-Abschnitt eine Ringwand des Werkzeugaufnahme-Endabschnitts erstreckt, von welcher die von dem zweiten äußeren Umfangs-Klemmwandabschnitt gegen das aufgenommene äußere Spanwerkzeug ausgeübte Klemmkraft und die von dem zweiten inneren Umfangs-Klemmwandabschnitt gegen das innere Spanwerkzeug ausgeübte Klemmkraft gegenaufnehmbar (d.h. zumindest im Wesentlichen gegenaufnehmbar) sind.

Der jeweilige, wie oben beschriebene Werkzeughalter kann die im Rahmen der obigen Beschreibung des zugehörigen Kombinationswerkzeugs genannten weiteren Merkmale jeweils individuell optional haben. Z.B. kann der Werkzeughalter wie in den abhängigen Ansprüchen 9-15 beschrieben weitergebildet sein.

Sofern nicht anders angegeben, stellen die Ausdrücke erster, erstes, etc. und zweiter, zweites, etc. lediglich eine namentliche Bezeichnung der damit bezeichneten Merkmale dar und legen daher keine bestimmte Reihenfolge des Vorhandenseins/Vorkommens der damit bezeichneten Merkmale fest.

Die Erfindung wird nachfolgend anhand von (die Erfindung nicht einschränkenden) Ausführungsbeispielen weiter erläutert. In der Zeichnung zeigen:
Fig. 1 eine teilweise aufgeschnittene seitliche Explosionsansicht eines Kombinationswerkzeugs gemäß einer Ausführungsform der Erfindung,
Fig. 2 eine teilweise aufgeschnittene seitliche Ansicht des Kombinationswerkzeugs von Fig. 1 im Zusammenbauzustand,
Fig. 3 eine teilweise aufgeschnittene Perspektivansicht des Kombinationswerkzeugs von Figuren 1 und 2,
Fig. 4 eine aufgeschnittene Perspektivansicht eines Werkzeughalters des Kombinationswerkzeugs von Figuren 1-3 gemäß einer Ausführungsform der Erfindung, und
Figuren 5a-5d mögliche Anwendungen des Kombinationswerkzeugs gemäß der Erfindung.

Über sämtliche Figuren hinweg werden für die gleichen Bauteile die gleichen Bezugszeichen verwendet.

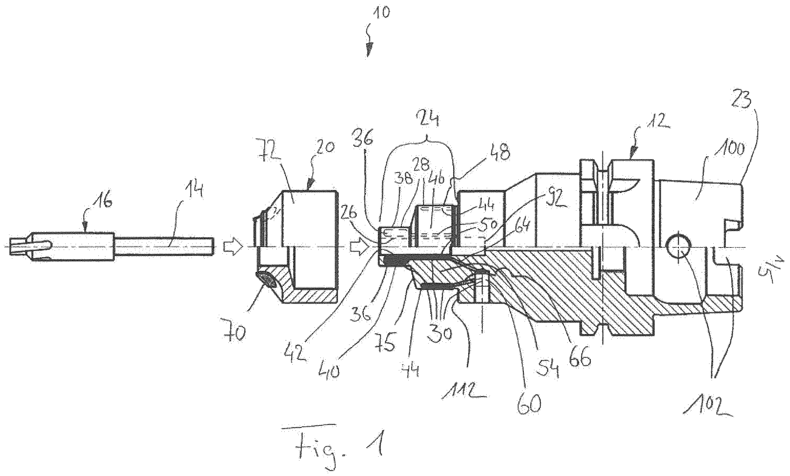

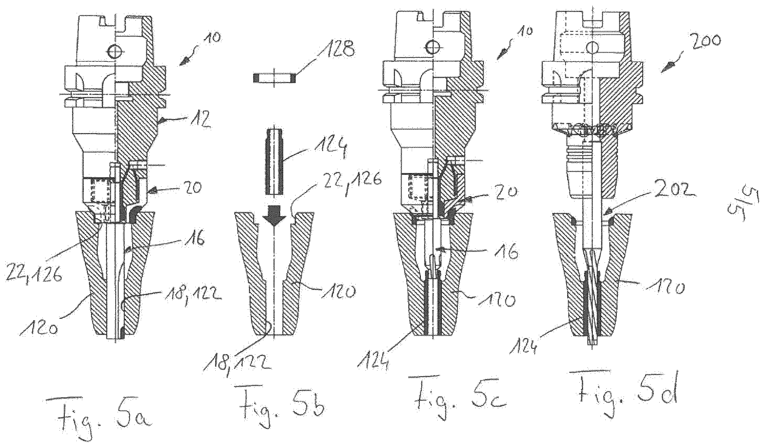

Mit Bezug auf die Figuren 1-4 und 5a-5c weist ein Kombinationswerkzeug 10 gemäß einer Ausführungsform der Erfindung auf einen Werkzeughalter 12, der sich entlang einer Werkzeugdrehachse 14 erstreckt, die eine axiale Erstreckung definiert, ein inneres Spanwerkzeug 16 zum spanenden Bearbeiten eines ersten, zentralen Lochbereichs 18 (siehe z.B. Figuren 5a und 5b) und einem äußeren, hülsenförmigen Spanwerkzeug 20 zum spanenden Bearbeiten eines bezüglich des ersten Lochbereichs 18 radial äußeren, zweiten Lochbereichs 22 (siehe z.B. Figuren 5a und 5b), wobei der Werkzeughalter 12 einen freien (d.h. von einer Antriebsseite 23 des Werkzeughalters 12 axial abgewandten), axialen Werkzeugaufnahme-Endabschnitt 24 aufweist, der ein zentrales, sich axial erstreckendes Werkzeugaufnahme-Loch 26 zur Aufnahme des inneren Spanwerkzeugs 16 und eine das zentrale Werkzeugaufnahme-Loch 26 umgebende Werkzeugaufnahme-Umfangsfläche 28 zur Aufnahme des äußeren Spanwerkzeugs 20 hat, sodass sich der Werkzeugaufnahme-Endabschnitt 24 bei davon aufgenommenem inneren und äußeren Spanwerkzeug 16, 20 radial zwischen dem inneren und dem äußeren Spanwerkzeug 16, 20 erstreckt, wobei im Werkzeugaufnahme-Endabschnitt 24 eine Hydraulikkammer 30 ausgebildet ist, in welcher eine variabel unter Hydraulikdruck setzbare Hydraulikflüssigkeit aufgenommen ist, und wobei der Werkzeugaufnahme-Endabschnitt 24 eine äußere, elastisch radial nach außen auslenkbare Klemmwand 32 und eine innere, elastisch radial nach innen auslenkbare Klemmwand 34 aufweist, welche die Hydraulikkammer 30 abschnittsweise begrenzen, sodass durch Erhöhen des Hydraulikdrucks in der Hydraulikkammer 30 sowohl die äußere Klemmwand 32 radial nach außen elastisch auslenkbar ist, um eine Klemmkraft gegen das aufgenommene äußere Spanwerkzeug 20 auszuüben, mittels deren das äußere Spanwerkzeug 20 an den Werkzeughalter 12 klemmbar ist, als auch die innere Klemmwand 34 radial nach innen elastisch auslenkbar ist, um eine Klemmkraft gegen das aufgenommene innere Spanwerkzeug 16 auszuüben, mittels deren das innere Spanwerkzeug 16 an den Werkzeughalter 12 klemmbar ist.

Die innere Klammwand 34 und die äußere Klemmwand 32 sind jeweils ringförmig ausgebildet und umgeben jeweils die Werkzeugdrehachse 14 koaxial.

Die Hydraulikkammer 30 weist einen ersten Hydraulikkammer-Abschnitt 36 auf, der in einem freien (d.h. von der Antriebsseite 23 des Werkzeughalters 12 abgewandten) axialen Endabschnitt 38 des Werkzeugaufnahme-Endabschnitts 24 des Werkzeughalters 12 ausgebildet ist und der ringförmig ausgebildet ist und die Werkzeugdrehachse 14 koaxial umgibt und der radial nach außen von einem ersten äußeren Umfangs-Klemmwandabschnitt 40 der äußeren Klemmwand 32 begrenzt wird und der radial nach innen von einem ersten inneren Umfangs-Klemmwandabschnitt 42 der inneren Klemmwand 34 begrenzt wird, sodass die von dem ersten äußeren Umfangs-Klemmwandabschnitt 40 und von dem ersten inneren Umfangs-Klemmwandabschnitt 42 ausgeübte Klemmkraft durch die im ersten Hydraulikkammer-Abschnitt 36 vorliegende Hydraulikflüssigkeit radial zwischen dem ersten äußeren und dem ersten inneren Umfangs-Klemmwandabschnitt 40, 42 übertragen wird.

Die Hydraulikkammer weist ferner einen zweiten, äußeren Hydraulikkammer-Abschnitt 44 auf, der in einem sich an den freien axialen Endabschnitt 38 axial (in Richtung zu der Antriebsseite 23 hin) anschließenden Abschnitt 46 des Werkzeugaufnahme-Endabschnitts 24 des Werkzeughalters 12 ausgebildet ist und der ringförmig ausgebildet ist und die Werkzeugdrehachse 14 umgibt und der radial nach außen von einem zweiten äußeren Umfangs-Klemmwandabschnitt 48 der äußeren Klemmwand begrenzt wird, und wobei die Hydraulikkammer 30 einen zweiten, inneren Hydraulikkammer-Abschnitt 50 aufweist, der in dem sich an den freien axialen Endabschnitt 38 axial anschließenden Abschnitt 46 des Werkzeugaufnahme-Endabschnitts 24 des Werkzeughalters 12 ausgebildet ist, optional axial auf Höhe des zweiten äußeren Hydraulikkammer-Abschnitt 44 ausgebildet ist, und der ringförmig ausgebildet ist und die Werkzeugdrehachse 14 koaxial umgibt und der radial nach innen von einem zweiten inneren Umfangs-Klemmwandabschnitt 52 der inneren Klemmwand 34 begrenzt wird, wobei sich radial zwischen dem zweiten, äußeren Hydraulikkammer-Abschnitt 44 und dem zweiten, inneren Hydraulikkammer-Abschnitt 50 eine sich koaxial um die Werkzeugdrehachse 14 erstreckende Ringwand 54 des Werkzeugaufnahme-Endabschnitts 24 erstreckt, von welcher die von dem zweiten äußeren Umfangs-Klemmwandabschnitt 48 gegen das aufgenommene äußere Spanwerkzeug 20 radial nach außen ausgeübte Klemmkraft und die von dem zweiten inneren Umfangs-Klemmwandabschnitt gegen das innere Spanwerkzeug 16 radial nach innen ausgeübte Klemmkraft jeweils entgegengesetzt, d.h. radial nach innen bzw. radial nach außen, gegenaufnehmbar (d.h. zumindest im Wesentlichen gegenaufnehmbar) sind.

Die radiale, elastische Nachgiebigkeit des zweiten äußeren Umfangs-Klemmwandabschnitts 48 ist z.B. größer als die radiale, elastische Nachgiebigkeit des ersten äußeren Umfangs-Klemmwandabschnitts 40, sodass auf Basis eines gleichen hydraulischen Drucks, der in der Hydraulikkammer 30 und damit in allen deren Hydraulikkammer-Abschnitten 36, 44, 50 vorliegt, die von dem zweiten äußeren Umfangs-Klemmwandabschnitt 48 ausgeübte Klemmkraft größer ist als die von dem ersten äußeren Umfangs-Klemmwandabschnitt 40 ausgeübte Klemmkraft.

Der erste äußere Umfangs-Klemmwandabschnitt 40 hat z.B. eine radiale Wandstärke t40, die größer ist als die radiale Wandstärke t48 des zweiten äußeren Umfangs-Klemmwandabschnitts 48.

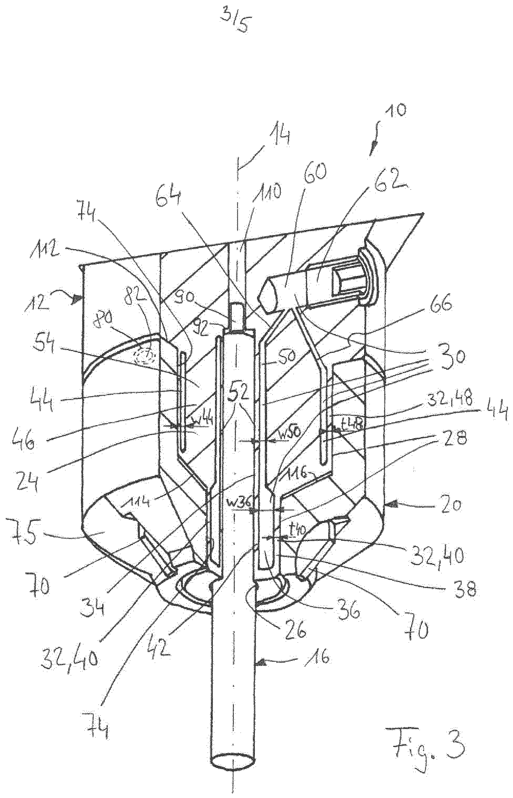

Die Hydraulikkammer 30 weist ferner einen Druckkammer-Abschnitt 60 auf, welcher von einem bewegbaren Kolben 62 (siehe Fig. 3) begrenzt wird, durch dessen Bewegung das Volumen des Druckkammer-Abschnitts 60 und damit der Hydraulikkammer 30 zum entsprechenden Erhöhen und Erniedrigen des Hydraulikdrucks in der Hydraulikkammer 30 variierbar ist.

Der bewegbare Kolben 62 ist hier von einer Madenschraube gebildet, welche in den Druckkammer-Abschnitt 60 variabel ein- und ausschraubbar ist. Der bewegbare Kolben 62, und damit z.B. die Madenschraube kann, z.B. an seinem Stirnende, mit einem (nicht dargestellten) Dichtungselement, z.B. einem Kunststoffdichtungselement, versehen sein, um durch dieses eine, z.B. verbesserte, Kolbenabdichtung gegen die Innenwandung des Druckkammer-Abschnitts 60 zu erzielen.

Der Druckkammer-Abschnitt 60 ist über einen ersten hydraulischen Verbindungskanal 64 mit dem zweiten, inneren Hydraulikkammer-Abschnitt 50 hydraulisch verbunden und ist über einen zweiten, von dem ersten Verbindungskanal 64 verschiedenen Verbindungskanal 66 mit dem zweiten, äußeren Hydraulikkammer-Abschnitt 44 hydraulisch verbunden ist.

Der erste Hydraulikkammer-Abschnitt 36 ist unmittelbar mit dem zweiten, inneren Hydraulikkammer-Abschnitt 50 hydraulisch verbunden bzw. schließt sich an den letzteren unmittelbar axial an und ist nur mittelbar, z.B. hier über den Druckkammer-Abschnitt 60, mit dem zweiten, äußeren Hydraulikkammer-Abschnitt 44 verbunden ist.

Der zweite, äußere Hydraulikkammer-Abschnitt 44 erstreckt sich koaxial rund um die Werkzeugdrehachse 14 durchgehend radial weiter außen als der erste Hydraulikkammer-Abschnitt 36. Der zweite, innere Hydraulikkammer-Abschnitt 50 erstreckt sich in dieser Ausführungsform z.B. in etwa auf demselben radialen Niveau wie der erste Hydraulikkammer-Abschnitt 36.

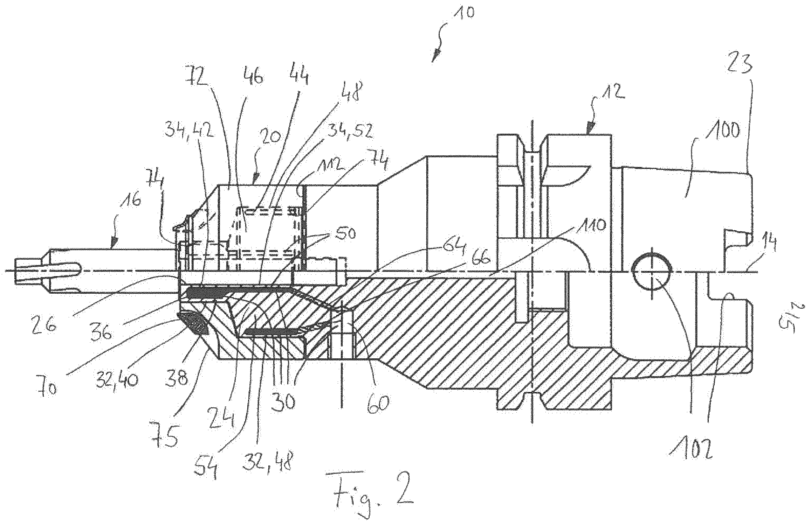

Das äußere Spanwerkzeug 20 ist mit einer Anzahl von spanenden Schneiden 70, welche an einem Schneiden-Halter 72 des äußeren Spanwerkzeugs 20 fest angebracht sind. Die Schneiden 70 sind z.B. aus einem von dem Schneiden-Halter 72 unterschiedlichen Material ausgebildet. Der Schneiden-Halter 72 hat eine Innenumfangsfläche 74, welche auf der Werkzeugaufnahme-(Außen-)Umfangsfläche 28 des Werkzeugaufnahme-Endabschnitts 24 des Werkzeughalters 24 passend aufliegt und gegen welche die Klemmkräfte von den äußeren Umfangs-Klemmwandabschnitten 40, 48 radial nach außen ausgeübt werden. Die Schneiden 70 sind, wie aus den Figuren 2 und 3 ersichtlich, bei aufgenommenem äußerem Spanwerkzeug 20 z.B. axial auf Höhe des ersten Hydraulikkammer-Abschnitts 36 angeordnet. Ferner sind die Schneiden 70 (zumindest teilweise) auf einer Axialschulter 75 des äußeren Spanwerkzeugs 20 angeordnet, welche sich bei aufgenommenen äußeren Spanwerkzeug 20 axial in etwa auf Höhe des ersten Hydraulikammer-Abschnitts 36 erstreckt, wobei diese Axialschulter 75 in Axialrichtung leicht geneigt verläuft bzw. verlaufen kann. Der aufgenommene Schneiden-Halter 72 und damit das aufgenommene äußere Spanwerkzeug 20 haben damit ferner auf axialer Höhe der zweiten Hydraulikkammer-Abschnitte 44, 50 einen größeren radialen Durchmesser als auf axialer Höhe des ersten Hydraulikkammer-Abschnitts 36.

Wie ferner aus den Figuren 2 und 3 ersichtlich ist, ist das äußere Spanwerkzeug 20, wenn von dem Werkzeughalter 12 aufgenommen, auf axialer Höhe mit dem zweiten, äußeren Hydraulikkammer-Abschnitt 44 und frei von spanenden Schneiden.

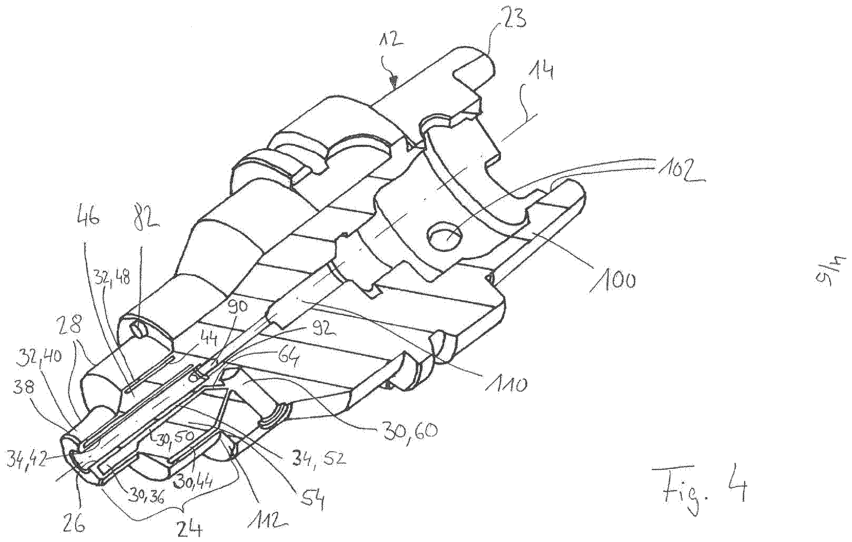

Das äußere Spanwerkzeug 20 ist ferner z.B. auf einer dem Werkzeughalter 12 zugewandten Stirnseite mit einer axialen Aussparung 80 (siehe Fig. 3) versehen, wobei der Werkzeughalter 12 z.B. mit einem zu dieser Aussparung 80 korrespondierenden, axialen Vorsprung (siehe Figuren 3 und 4) versehen ist, welcher bei aufgenommenem äußeren Spanwerkzeug 20 in die Aussparung 80 formschlüssig eingreift, um die Übertragung eines Drehmoments von dem Werkzeughalter 12 auf das äußere Spanwerkzeug 20 um die Werkzeugdrehachse 14 zumindest zu unterstützen.

Die radiale Dicke (bzw. Weite) w36 des ersten Hydraulikkammer-Abschnitts 36 ist größer als die radiale Dicke (bzw. Weite) w44 des zweiten, äußeren Hydraulikkammer-Abschnitts 44 und als die radiale Dicke (bzw. Weite) w50 der zweiten, inneren Hydraulikkammer-Abschnitts 50.

Der Werkzeughalter 12 weist ferner in dem Werkzeugaufnahme-Loch 26 einen Axialanschlag auf, der von einer Madenschraube 90 gebildet ist, die in das Werkzeugaufnahme-Loch 26 variabel axial einschraubbar ist und gegen welche das darin aufgenommene innere Spanwerkzeug 16 axial anschlagen kann, so dass eine axiale Verschiebbarkeit des inneren Spanwerkzeugs 16 in Richtung in das Werkzeugaufnahme-Loch 26 hinein von dem von der Madenschraube 90 gebildeten Axialanschlag begrenzt ist. Bei nicht Vorhandensein der Madenschraube 90 kann der Axialanschlag auch von einer in dem Werkzeugaufnahme-Loch 26 ausgebildeten Axialschulter 92 gebildet sein, wobei der Axialanschlag dann nicht verstellbar wäre.

Der Werkzeughalter 12 weist ferner einen zu dem Werkzeugaufnahme-Endabschnitt 24 axial entgegengesetzten, an der Antriebseite 23 gelegenen Antriebsaufnahme-Endabschnitt 100 auf, welcher einen Antriebsaufnahme-Kupplungsteil 102 aufweist, der derart ausgebildet ist, dass er bezüglich der Werkzeugdrehachse 14 in form- und/oder kraftschlüssiger Weise drehfest mit einem (nicht dargestellten) Antriebskupplungsteil eines (nicht dargestellten) Drehantriebs verbindbar ist.

Der Werkzeughalter 12 kann ferner einen oder mehrere Kühlkanäle zum Zuführen von Kühlflüssigkeit haben; z.B. ist in dem Werkzeughalter 12 ein zentraler Kühlkanal 110 ausgebildet. Der Kühlkanal 110 oder die Kühlkanäle kann/können auch zum Abführen von abgespantem Material dienen.

Der Werkzeughalter 12 hat ferner eine axiale Anschlagschulter 112 an welcher das aufgenommene äußere Spanwerkzeug 20 mit einer der Antriebsseite 23 zugewandten Stirnseite axial anschlägt und damit axial in Richtung zu der Antriebseite 23 hin begrenzt ist. Ferner hat der Werkzeugaufnahme-Endabschnitt 24 axial in etwa zwischen dem ersten Hydraulikkammer-Abschnitt 36 und den zweiten Hydraulikkammer-Abschnitten 44, 50 eine Axialschulter 114, die im axialen Abstand zu einer Innen-Axialschulter 116 des aufgenommenen äußeren Spanwerkzeugs 20 liegt.

In den Figuren 5a-5d sind mögliche Verwendungen bzw. Anwendungen des vorausgehend beschriebenen Kombinationswerkzeugs 10 dargestellt.

In der Fig. 5a wird das Kombinationswerkzeug 10 dazu verwendet, um in einem Zylinderkopf 120 für einen Verbrennungsmotor gleichzeitig ein erstes zentrales Loch 122, das einen ersten Lochbereich 18 darstellt und das für die Aufnahme einer Ventilschaft-Führungshülse 124 vorgesehen ist, und einer dazu koaxialen und radial äußeren Ausnehmung 126 spanend zu bearbeiten, die einen zweiten Lochbereich 22 darstellt und die zur Aufnahme eines Ventilsitzrings 128 in dem Zylinderkopf 120 dient. Das zentrale Loch 120 wird hierbei von dem inneren Spanwerkzeug 16 bearbeitet, und die Ausnehmung 126 wird von dem äußeren Spanwerkzeug 20 bearbeitet.

Gemäß Figur 5b werden nach der gemäß Fig. 5a erfolgten Bearbeitung die Führungshülse 124 in das zentrale Loch 120 und der Ventilsitzring 128 in die Ausnehmung 126 eingesetzt.

Danach, wie aus Fig. 5c ersichtlich ist, erfolgt durch das Kombinationswerkzeug 10 dann eine gleichzeitige Bearbeitung eines oberen Abschnitts der Innenumfangsfläche der eingesetzten Führungshülse 124 und eines oberen Abschnitts der Innenumfangsfläche sowie eines inneren Abschnitts der Stirnfläche des Ventilsitzrings 128. Hierbei wird die Führungshülse 124 durch ein inneres Spanwerkzeug 16 bearbeitet, welches sich hinsichtlich seiner Schneiden-Art von dem in Fig. 5a verwendeten inneren Spanwerkzeug 16 unterscheidet. Ebenso wird beim Vorgang in Fig. 5c ein äußeres Spanwerkzeug 20 verwendet, welches sich in seiner Schneiden-Art von dem in Fig. 5a verwendeten äußeren Spanwerkzeug 20 unterscheidet.

Wie aus der Fig. 5d ersichtlich ist, wird letztlich die Führungshülse 124 an deren gesamten Innenumfangsfläche z.B. durch ein von dem Kombinationswerkzeug 10 verschiedenes Werkzeug 200 über ein daran angebrachtes zentrales Spanwerkzeugteil 202 spanend endbearbeitet. Diese in der Fig. 5d gezeigte Endbearbeitung der Führungshülse 124 könnte aber auch z.B. durch ein entsprechend dem Spanwerkzeugteil 202 ausgebildetes inneres Spanwerkzeug 16 des erfindungsgemäßen Kombinationswerkzeugs 10 durchgeführt werden, wobei dann das äußere Spanwerkzeug 20 z.B. außer Kontakt mit dem zu bearbeitenden Werkstück gehalten würde.

## Patentansprüche

1. Kombinationswerkzeug (10) mit
- einem Werkzeughalter (12), der sich entlang einer Werkzeugdrehachse (14) erstreckt, die eine axiale Erstreckung definiert,
- einem inneren Spanwerkzeug (16) zum spanenden Bearbeiten eines ersten, zentralen Lochbereichs (18) und
- einem äußeren, hülsenförmigen Spanwerkzeug (20) zum spanenden Bearbeiten eines bezüglich des ersten Lochbereichs radial äußeren, zweiten Lochbereichs (22),
wobei der Werkzeughalter (12) einen freien, axialen Werkzeugaufnahme-Endabschnitt (24) aufweist, der ein zentrales Werkzeugaufnahme-Loch (26) zur Aufnahme des inneren Spanwerkzeugs und eine das zentrale Werkzeugaufnahme-Loch umgebende Werkzeugaufnahme-Umfangsfläche (28) zur Aufnahme des äußeren Spanwerkzeugs hat, sodass sich der Werkzeugaufnahme-Endabschnitt (24) bei davon aufgenommenem inneren und äußeren Spanwerkzeug radial zwischen dem inneren und dem äußeren Spanwerkzeug erstreckt, wobei im Werkzeugaufnahme-Endabschnitt eine Hydraulikkammer (30) ausgebildet ist, in welcher eine variabel unter Hydraulikdruck setzbare Hydraulikflüssigkeit aufgenommen ist, und wobei der Werkzeugaufnahme-Endabschnitt eine äußere, elastisch radial nach außen auslenkbare Klemmwand (32) und eine innere, elastisch radial nach innen auslenkbare Klemmwand (34) aufweist, welche die Hydraulikkammer abschnittsweise begrenzen, sodass durch Erhöhen des Hydraulikdrucks in der Hydraulikkammer sowohl die äußere Klemmwand (32) nach außen elastisch auslenkbar ist, um eine Klemmkraft gegen das aufgenommene äußere Spanwerkzeug auszuüben, mittels deren das äußere Spanwerkzeug an den Werkzeughalter klemmbar ist, als auch die innere Klemmwand (34) nach innen elastisch auslenkbar ist, um eine Klemmkraft gegen das aufgenommene innere Spanwerkzeug auszuüben, mittels deren das innere Spanwerkzeug an den Werkzeughalter klemmbar ist,
**dadurch gekennzeichnet dass** die Hydraulikkammer (30) einen zweiten, äußeren Hydraulikkammer-Abschnitt (44) aufweist, der in einem sich an einen freien axialen Endabschnitt (38) axial anschließenden Abschnitt (46) des Werkzeugaufnahme-Endabschnitts (24) des Werkzeughalters (12) ausgebildet ist und der ringförmig ausgebildet ist und die Werkzeugdrehachse (14) umgibt und der radial nach außen von einem zweiten äußeren Umfangs-Klemmwandabschnitt (48) der äußeren Klemmwand (32) begrenzt wird, und dass die Hydraulikkammer (30) einen zweiten, inneren Hydraulikkammer-Abschnitt (50) aufweist, der in dem sich an den freien axialen Endabschnitt (38) axial anschließenden Abschnitt (46) des Werkzeugaufnahme-Endabschnitts (24) des Werkzeughalters (12) ausgebildet ist, optional axial auf Höhe des zweiten äußeren Hydraulikkammer-Abschnitt (44) ausgebildet ist, und der ringförmig ausgebildet ist und die Werkzeugdrehachse (14) umgibt und der radial nach innen von einem zweiten inneren Umfangs-Klemmwandabschnitt (52) der inneren Klemmwand (34) begrenzt wird, wobei sich radial zwischen dem zweiten, äußeren Hydraulikkammer-Abschnitt (44) und dem zweiten, inneren Hydraulikkammer-Abschnitt (50) eine Ringwand (54) des Werkzeugaufnahme-Endabschnitts (24) erstreckt, von welcher die von dem zweiten äußeren Umfangs-Klemmwandabschnitt (48) gegen das aufgenommene äußere Spanwerkzeug (20) ausgeübte Klemmkraft und die von dem zweiten inneren Umfangs-Klemmwandabschnitt (52) gegen das innere Spanwerkzeug (16) ausgeübte Klemmkraft gegenaufnehmbar sind.

2. Kombinationswerkzeug (10) gemäß Anspruch 1, wobei die Hydraulikkammer (30) einen ersten Hydraulikkammer-Abschnitt (36) hat, der in dem freien axialen Endabschnitt (38) des Werkzeugaufnahme-Endabschnitts (24) des Werkzeughalters (12) ausgebildet ist und der ringförmig ausgebildet ist und die Werkzeugdrehachse (14) umgibt und der radial nach außen von einem ersten äußeren Umfangs-Klemmwandabschnitt (40) der äußeren Klemmwand (32) begrenzt wird und der radial nach innen von einem ersten inneren Umfangs-Klemmwandabschnitt (42) der inneren Klemmwand (34)begrenzt wird, sodass die von dem ersten äußeren Umfangs-Klemmwandabschnitt (40) und von dem ersten inneren Umfangs-Klemmwandabschnitt (42) ausgeübte Klemmkraft durch die im ersten Hydraulikkammer-Abschnitt vorliegende Hydraulikflüssigkeit radial zwischen dem ersten äußeren und dem ersten inneren Umfangs-Klemmwandabschnitt übertragen wird, wobei optional die radiale, elastische Nachgiebigkeit des zweiten äußeren Umfangs-Klemmwandabschnitts (48) größer ist als die radiale, elastische Nachgiebigkeit des ersten äußeren Umfangs-Klemmwandabschnitts (40), sodass auf Basis eines gleichen hydraulischen Drucks die von dem zweiten äußeren Umfangs-Klemmwandabschnitt (48) ausgeübte Klemmkraft größer ist als die von dem ersten äußeren Umfangs-Klemmwandabschnitt (40) ausgeübte Klemmkraft, wobei zum Beispiel der erste äußere Umfangs-Klemmwandabschnitt (40) eine radiale Wandstärke (t40) hat, die größer ist als die radiale Wandstärke (t48) des zweiten äußeren Umfangs-Klemmwandabschnitts (48).

3. Kombinationswerkzeug (10) gemäß irgendeinem der Ansprüche 1 bis 2, wobei die Hydraulikkammer (30) einen Druckkammer-Abschnitt (60) aufweist, welcher von einem bewegbaren Kolben (62) begrenzt wird, durch dessen Bewegung das Volumen der Hydraulikkammer (30) zum entsprechenden Erhöhen und Erniedrigen des Hydraulikdrucks in der Hydraulikkammer (30) variierbar ist,
wobei optional der bewegbare Kolben (62) von einer Schraube, optional einer Madenschraube, gebildet ist, welche in den Druckkammer-Abschnitt (60) einschraubbar ist, und/oder wobei optional der Druckkammer-Abschnitt (60) über einen ersten Verbindungskanal (64) mit dem zweiten, inneren Hydraulikkammer-Abschnitt (50) hydraulisch verbunden ist und wobei der Druckkammer-Abschnitt (60) über einen zweiten, von dem ersten Verbindungskanal (64) verschiedenen Verbindungskanal (66) mit dem zweiten, äußeren Hydraulikkammer-Abschnitt (44) hydraulisch verbunden ist, und/oder
sofern in Kombination mit Anspruch 2, wobei optional der erste Hydraulikkammer-Abschnitt (36) unmittelbar mit dem zweiten, inneren Hydraulikkammer-Abschnitt (50) hydraulisch verbunden ist und nur mittelbar über den Druckkammer-Abschnitt (60) mit dem zweiten, äußeren Hydraulikkammer-Abschnitt (44) verbunden ist.

4. Kombinationswerkzeug (10) gemäß irgendeinem der vorhergehenden Ansprüche sofern in Kombination mit Anspruch 2, wobei der zweite, äußere Hydraulikkammer-Abschnitt (44) sich radial weiter außen erstreckt als der erste Hydraulikkammer-Abschnitt (36) und/oder wobei das äußere Spanwerkzeug (20) mit einer Anzahl von spanenden Schneiden (70) ausgestattet ist, die bei aufgenommenem äußerem Spanwerkzeug (20) axial auf Höhe des ersten Hydraulikkammer-Abschnitts (36) angeordnet sind.

5. Kombinationswerkzeug (10) gemäß irgendeinem der vorhergehenden Ansprüche, wobei das äußere Spanwerkzeug (20), wenn von dem Werkzeughalter (12) aufgenommen, auf axialer Höhe mit dem zweiten, äußeren Hydraulikkammer-Abschnitt (44) frei von spanenden Schneiden ist, und/oder
wobei das äußere Spanwerkzeug (20) mit einem axialen Vorsprung (80) oder einer axialen Aussparung versehen ist und wobei der Werkzeughalter (12) versehen ist mit einer axialen Aussparung (82) zum formschlüssigen In-Eingriff-Stehen mit dem axialen Vorsprung des aufgenommenen äußeren Spanwerkzeugs oder mit einem axialen Vorsprung zum formschlüssigen In-Eingriff-Stehen mit der axialen Aussparung des aufgenommenen äußeren Spanwerkzeugs (20), um jeweils die Übertragung eines Drehmoments von dem Werkzeughalter (12) auf das äußere Spanwerkzeug (20) um die Werkzeugdrehachse zumindest zu unterstützen, und/oder
sofern in Kombination mit Anspruch 2, wobei die radiale Dicke der ersten Hydraulikkammer (30) größer ist als die radiale Dicke der zweiten, äußeren Hydraulikkammer (44) und/oder als die radiale Dicke der zweiten, inneren Hydraulikkammer (50), und/oder
wobei der Werkzeughalter (12) in dem Werkzeugaufnahme-Loch (26) einen Axialanschlag (90; 92) aufweist, gegen welche das aufgenommene innere Spanwerkzeug (16) axial anschlagen kann, so dass eine axiale Verschiebbarkeit des inneren Spanwerkzeugs (16) in Richtung in das Werkzeugaufnahme-Loch von dem Axialanschlag begrenzt ist, wobei zum Beispiel der Axialanschlag axial verstellbar ausgebildet ist, wobei optional der Axialanschlag als axial verstellbare Schraube, optional als axial verstellbare Madenschraube (90) ausgebildet ist, die axial in das Werkzeugaufnahme-Loch (26) des Werkzeughalters (12) einschraubbar ist.

6. Verwendung eines Kombinationswerkzeugs (10) gemäß irgendeinem der Ansprüche 1-5 zur Bearbeitung, optional zur gleichzeitigen Bearbeitung, eines zentralen Lochs (122) zur Aufnahme einer Ventilführungshülse (124) und einer dazu koaxialen und radial äußeren Ausnehmung (126) zur Aufnahme eines Ventilsitzrings (128) in einem Zylinderkopf (120).

7. Verwendung eines Kombinationswerkzeugs (10) gemäß irgendeinem der Ansprüche 1-5 zur Bearbeitung, optional zur gleichzeitigen Bearbeitung, einer Ventilführungshülse (124) und eines Ventilsitzrings (128) in einem Zylinderkopf (120).

8. Werkzeughalter (12) für ein Kombinationswerkzeug (10) gemäß irgendeinem der vorhergehenden Ansprüche sofern in Kombination mit dem Anspruch 2, wobei der Werkzeughalter (12) sich entlang einer Werkzeugdrehachse (14) erstreckt, die eine axiale Erstreckung definiert, und der Werkzeughalter (12) einen freien, axialen Werkzeugaufnahme-Endabschnitt (24) aufweist, der ein zentrales Werkzeugaufnahme-Loch (26) zur Aufnahme eines inneren Spanwerkzeugs (16) und eine das zentrale Werkzeugaufnahme-Loch (26) umgebende Werkzeugaufnahme-Umfangsfläche (28) zur Aufnahme eines äußeren Spanwerkzeugs (20) hat, sodass sich der Werkzeugaufnahme-Endabschnitt (24) bei davon aufgenommenem inneren und äußeren Spanwerkzeug (16, 20) radial zwischen dem inneren und dem äußeren Spanwerkzeug (16, 20) erstreckt, wobei im Werkzeugaufnahme-Endabschnitt (24) eine Hydraulikkammer ausgebildet ist (30), in welcher eine variabel unter Hydraulikdruck setzbare Hydraulikflüssigkeit aufgenommen ist, und wobei der Werkzeugaufnahme-Endabschnitt (24) eine äußere, elastisch radial nach außen auslenkbare Klemmwand (32) und eine innere, elastisch radial nach innen auslenkbare Klemmwand (34) aufweist, welche die Hydraulikkammer (30) abschnittsweise begrenzen, sodass durch Erhöhen des Hydraulikdrucks in der Hydraulikkammer (30) sowohl die äußere Klemmwand (32) nach außen elastisch auslenkbar ist, um eine Klemmkraft gegen das aufgenommene äußere Spanwerkzeug (20) auszuüben, mittels deren das äußere Spanwerkzeug (20) an den Werkzeughalter (12) klemmbar ist, als auch die innere Klemmwand (34) nach innen elastisch auslenkbar ist, um eine Klemmkraft gegen das aufgenommene innere Spanwerkzeug (16) auszuüben, mittels deren das innere Spanwerkzeug (16) an den Werkzeughalter klemmbar ist, **dadurch gekennzeichnet dass** die Hydraulikkammer (30) einen ersten Hydraulikkammer-Abschnitt (36) hat, der in einem freien axialen Endabschnitt (38) des Werkzeugaufnahme-Endabschnitts (24) des Werkzeughalters (12) ausgebildet ist und der ringförmig ausgebildet ist und die Werkzeugdrehachse (14) umgibt und der radial nach außen von einem ersten äußeren Umfangs-Klemmwandabschnitt (40) der äußeren Klemmwand (32) begrenzt wird und der radial nach innen von einem ersten inneren Umfangs-Klemmwandabschnitt (42) der inneren Klemmwand (34) begrenzt wird, sodass die von dem ersten äußeren Umfangs-Klemmwandabschnitt (40) und von dem ersten inneren Umfangs-Klemmwandabschnitt (42) erzeugte Klemmkraft durch die im ersten Hydraulikkammer-Abschnitt vorliegende Hydraulikflüssigkeit radial zwischen dem ersten äußeren und dem ersten inneren Umfangs-Klemmwandabschnitt (40, 42) übertragen wird, und
dass die Hydraulikkammer (30) einen zweiten, äußeren Hydraulikkammer-Abschnitt (44) aufweist, der in einem sich an den freien axialen Endabschnitt (38) axial anschließenden Abschnitt (46) des Werkzeugaufnahme-Endabschnitts (24) des Werkzeughalters (12) ausgebildet ist und der ringförmig ausgebildet ist und die Werkzeugdrehachse (14) umgibt und der radial nach außen von einem zweiten äußeren Umfangs-Klemmwandabschnitt (48) der äußeren Klemmwand (32) begrenzt wird, und wobei die Hydraulikkammer (30) einen zweiten, inneren Hydraulikkammer-Abschnitt (50) aufweist, der in dem sich an den freien axialen Endabschnitt (38) axial anschließenden Abschnitt (46) des Werkzeugaufnahme-Endabschnitts (24) des Werkzeughalters (12) ausgebildet ist, optional axial auf Höhe des zweiten äußeren Hydraulikkammer-Abschnitt (44) ausgebildet ist, und der ringförmig ausgebildet ist und die Werkzeugdrehachse (14) umgibt und der radial nach innen von einem zweiten inneren Umfangs-Klemmwandabschnitt (52) der inneren Klemmwand (34) begrenzt wird, wobei sich radial zwischen dem zweiten, äußeren Hydraulikkammer-Abschnitt (44) und dem zweiten, inneren Hydraulikkammer-Abschnitt (50) eine Ringwand (54) des Werkzeugaufnahme-Endabschnitts (24) erstreckt, von welcher die von dem zweiten äußeren Umfangs-Klemmwandabschnitt (48) gegen das aufgenommene äußere Spanwerkzeug (20) ausgeübte Klemmkraft und die von dem zweiten inneren Umfangs-Klemmwandabschnitt (52) gegen das innere Spanwerkzeug (16) ausgeübte Klemmkraft gegenaufnehmbar sind.

9. Werkzeughalter (12) gemäß Anspruch 8, wobei die radiale, elastische Nachgiebigkeit des zweiten äußeren Umfangs-Klemmwandabschnitts (48) größer ist als die radiale, elastische Nachgiebigkeit des ersten äußeren Umfangs-Klemmwandabschnitts (40), sodass auf Basis eines gleichen hydraulischen Drucks die von dem zweiten äußeren Umfangs-Klemmwandabschnitt (48) ausgeübte Klemmkraft größer ist als die von dem ersten äußeren Umfangs-Klemmwandabschnitt (40) ausgeübte Klemmkraft.

10. Werkzeughalter (12) gemäß Anspruch 8 oder 9, wobei der erste äußere Umfangs-Klemmwandabschnitt (40) eine radiale Wandstärke (t40) hat, die größer ist als die radiale Wandstärke (t48) des zweiten äußeren Umfangs-Klemmwandabschnitts (48).

11. Werkzeughalter (12) gemäß irgendeinem der Ansprüche 8 bis 10, wobei die Hydraulikkammer (30) einen Druckkammer-Abschnitt (60) aufweist, welcher von einem bewegbaren Kolben (62) begrenzt wird, durch dessen Bewegung das Volumen der Hydraulikkammer (60) zum entsprechenden Erhöhen und Erniedrigen des Hydraulikdrucks in der Hydraulikkammer (30) variierbar ist,
wobei optional der bewegbare Kolben (62) von einer Schraube, optional einer Madenschraube, gebildet ist, welche in den Druckkammer-Abschnitt (60) einschraubbar ist, und/oder wobei optional der Druckkammer-Abschnitt (60) über einen ersten Verbindungskanal (64) mit dem zweiten, inneren Hydraulikkammer-Abschnitt (50) hydraulisch verbunden ist und wobei der Druckkammer-Abschnitt (60) über einen zweiten, von dem ersten Verbindungskanal (64) verschiedenen Verbindungskanal (66) mit dem zweiten, äußeren Hydraulikkammer-Abschnitt hydraulisch verbunden ist, und/oder wobei optional der erste Hydraulikkammer-Abschnitt (36) unmittelbar mit dem zweiten, inneren Hydraulikkammer-Abschnitt (50) hydraulisch verbunden ist und nur mittelbar über den Druckkammer-Abschnitt (60) mit dem zweiten, äußeren Hydraulikkammer-Abschnitt (44) verbunden ist.

12. Werkzeughalter (12) gemäß irgendeinem der Ansprüche 8 bis 11, wobei der zweite, äußere Hydraulikkammer-Abschnitt (44) sich radial weiter außen erstreckt als der erste Hydraulikkammer-Abschnitt (36).

13. Werkzeughalter (12) gemäß irgendeinem der Ansprüche 8 bis 12, wobei die radiale, elastische Nachgiebigkeit des zweiten äußeren Umfangs-Klemmwandabschnitts (48) größer ist als die radiale, elastische Nachgiebigkeit des ersten äußeren Umfangs-Klemmwandabschnitts (40), sodass auf Basis eines gleichen hydraulischen Drucks die von dem zweiten äußeren Umfangs-Klemmwandabschnitt (48) ausgeübte Klemmkraft größer ist als die von dem ersten äußeren Umfangs-Klemmwandabschnitt (40) jeweils ausgeübte Klemmkraft,
wobei optional der erste äußere Umfangs-Klemmwandabschnitt (40) eine radiale Wandstärke (t40) hat, die größer ist als die radiale Wandstärke (t48) des zweiten äußeren Umfangs-Klemmwandabschnitts (48).

14. Werkzeughalter (12) gemäß irgendeinem der Ansprüche 8 bis 13, wobei der Werkzeughalter (12) in dem Werkzeugaufnahme-Loch (26) einen Axialanschlag (90; 92) aufweist, gegen welchen das aufgenommene innere Spanwerkzeug (16) axial anschlagen kann, so dass eine axiale Verschiebbarkeit des inneren Spanwerkzeugs (16) in Richtung in das Werkzeugaufnahme-Loch (26) von dem Axialanschlag begrenzt ist.

15. Werkzeughalter (12) gemäß Anspruch 14, wobei der Axialanschlag axial verstellbar ausgebildet ist, wobei optional der Axialanschlag als axial verstellbare Schraube, optional als axial verstellbare Madenschraube (90) ausgebildet ist, die axial in das Werkzeugaufnahme-Loch (26) des Werkzeughalters (12) einschraubbar ist.

## Claims

1. Combination tool (10), having:
- a tool holder (12) that extends along a tool rotational axis (14) that defines an axial extension,
- an inner cutting tool (16) for machining a first, central hole region (18), and
- an outer, sleeve-shaped cutting tool (20) for machining a second hole region (22) radially outward relative to the first hole region,
wherein the tool holder (12) comprises a free, axial tool mounting end section (24) that has a central tool mounting opening (26) for mounting the inner cutting tool and a tool mounting peripheral surface (28) surrounding the central tool mounting opening for mounting the outer cutting tool, so that when the inner and outer cutting tools are mounted, the tool mounting end section (24) extends radially between the inner and outer cutting tools, wherein a hydraulic chamber (30) is formed in the tool mounting end section, in which a hydraulic fluid is contained that is variably settable under a hydraulic pressure, and wherein the tool mounting end section comprises an outer clamp wall (32) elastically deflectable radially outwards and an inner clamp wall (34) elastically deflectable radially inwards, which define the hydraulic chamber in sections so that through an increase of the hydraulic pressure in the hydraulic chamber both the outer clamp wall (32) is elastically deflectable outwards to exert a clamping force on the mounted outer cutting tool, through which the outer cutting tool is clampable to the tool holder, as well as the inner clamp wall (34) is elastically deflectable inwards to exert a clamping force on the mounted inner cutting tool, through which the inner cutting tool is clampable to the tool holder,
**characterized in that** the hydraulic chamber (30) comprises a second, outer hydraulic chamber section (44) formed in a section (46) of the tool mounting end section (24) of the tool holder (12) that is axially adjacent to a free axial end section (38), formed ring-shaped and encircling the tool rotational axis (14) and defined radially outwards by a second outer peripheral clamp wall section (48) of the outer clamp wall (32), and **in that**
the hydraulic chamber (30) comprises a second, inner hydraulic chamber section (50) formed in the section (46) of the tool mounting end section (24) of the tool holder (12) that is axially adjacent to the free axial end section (38), optionally formed axially level with the second outer hydraulic chamber section (44), formed ring-shaped and encircling the tool rotational axis (14) and defined radially inwards by a second inner peripheral clamp wall section (52) of the inner clamp wall (34), wherein an annular wall (54) of the tool mounting end section (24) extends radially between the second, outer hydraulic chamber section (44) and the second, inner hydraulic chamber section (50), by which the clamping force exerted by the second outer peripheral clamp wall section (48) on the mounted outer cutting tool (20) and the clamping force exerted by the second inner peripheral clamp wall section (52) on the inner cutting tool (16) are counteractable.

2. Combination tool (10) according to claim 1, wherein
the hydraulic chamber (30) has a first hydraulic chamber section (36) formed in the free axial end section (38) of the tool mounting end section (24) of the tool holder (12), formed ring-shaped and encircling the tool rotational axis (14) and defined radially outwards by a first outer peripheral clamp wall section (40) of the outer clamp wall (32) and defined radially inwards by a first inner peripheral clamp wall section (42) of the inner clamp wall (34), so that the clamping force exerted by the first outer peripheral clamp wall section (40) and by the first inner peripheral clamp wall section (42) is transferred radially between the first outer and the first inner peripheral clamp wall section via the hydraulic fluid present in the first hydraulic chamber section, wherein optionally the radial, elastic flexibility of the second outer peripheral clamp wall section (48) is greater than the radial, elastic flexibility of the first outer peripheral clamp wall section (40), so that based on an equal hydraulic pressure the clamping force exerted by the second outer peripheral clamp wall section (48) is greater than the clamping force exerted by the first outer peripheral clamp wall section (40), wherein, for example, the first outer peripheral clamp wall section (40) has a radial wall thickness (t40) that is greater than the radial wall thickness (t48) of the second outer peripheral clamp wall section (48).

3. Combination tool (10) according to any one of claims 1 to 2, wherein the hydraulic chamber (30) comprises a pressure chamber section (60), which is defined by a movable piston (62) through movement of which the volume of the hydraulic chamber (30) is variable to correspondingly increase and decrease the hydraulic pressure in the hydraulic chamber (30),
wherein optionally the movable piston (62) is constituted by a screw, optionally a set screw, which is screwable into the pressure chamber section (60), and/or wherein optionally the pressure chamber section (60) is hydraulically connected with the second, inner hydraulic chamber section (50) via a first connection channel (64) and
wherein the pressure chamber section (60) is hydraulically connected with the second, outer hydraulic chamber section (44) via a second connection channel (66) differing from the first connection channel (64), and/or,
as long as in combination with claim 2, wherein optionally the first hydraulic chamber section (36) is directly hydraulically connected with the second, inner hydraulic chamber section (50) and only indirectly connected with the second, outer hydraulic chamber section (44) via the pressure chamber section (60).

4. Combination tool (10) according to any one of the preceding claims as long as it is in combination with claim 2, wherein the second, outer hydraulic chamber section (44) extends farther radially outwards than the first hydraulic chamber section (36), and/or wherein the outer cutting tool (20) is provided with a number of cutting edges (70) that, when the outer cutting tool (20) is mounted, are arranged axially level with the first hydraulic chamber section (36).

5. Combination tool (10) according to any one of the preceding claims, wherein the outer cutting tool (20), if mounted on the tool holder (12), is free from cutting edges at an axial level of the second, outer hydraulic chamber section (44), and/or
wherein the outer cutting tool (20) is provided with an axial protrusion (80) or an axial recess and wherein the tool holder (12) is provided with an axial recess (82) for form-fitting engagement with the axial protrusion of the mounted outer cutting tool or with an axial protrusion for form-fitting engagement with the axial recess of the mounted outer cutting tool (20), to at least assist the transfer of torque around the tool rotational axis from the tool holder (12) to the outer cutting tool (20), and/or
as long as in combination with claim 2, wherein the radial thickness of the first hydraulic chamber (30) is greater than the radial thickness of the second, outer hydraulic chamber (44) and/or the radial thickness of the second, inner hydraulic chamber (50), and/or
wherein the tool holder (12) comprises an axial stop (90; 92) in the tool mounting opening (26), which the mounted inner cutting tool (16) can butt against axially, so that axial displaceability of the inner cutting tool (16) in a direction of the tool mounting opening is limited by the axial stop, wherein, for example, the axial stop is designed to be axially adjustable, wherein, optionally, the axial stop is designed as an axially adjustable screw, optionally as an axially adjustable set screw (90), that is axially screwable in the tool mounting opening (26) of the tool holder (12).

6. Use of a combination tool (10) according to any one of claims 1-5 for machining, optionally for simultaneous machining, of a central hole (122) for mounting a valve guide bushing (124) and a thereto coaxial and radially outer recess (126) for mounting a valve seat ring (128) in a cylinder head (120) .

7. Use of a combination tool (10) according to any one of claims 1-5 for machining, optionally for simultaneous machining, of a valve guide bushing (124) and a valve seat ring (128) in a cylinder head (120).

8. Tool holder (12) for a combination tool (10) according to any one of the preceding claims as long as it is in combination with claim 2, wherein the tool holder (12) extends along a tool rotational axis (14) that defines an axial extension and the tool holder (12) comprises a free axial tool mounting end section (24) that has a central tool mounting opening (26) for mounting an inner cutting tool (16) and a tool mounting peripheral surface (28) surrounding the central tool mounting opening (26) for mounting an outer cutting tool (20), so that when the inner and outer cutting tools (16, 20) are mounted, the tool mounting end section (24) extends radially between the inner and outer cutting tools (16, 20), wherein a hydraulic chamber (30) is formed in the tool mounting end section (24), in which a hydraulic fluid is contained that is variably settable under a hydraulic pressure, and wherein the tool mounting end section (24) comprises an outer clamp wall (32) elastically deflectable radially outwards and an inner clamp wall (34) elastically deflectable radially inwards, which define the hydraulic chamber (30) in sections so that through an increase of the hydraulic pressure in the hydraulic chamber (30) both the outer clamp wall (32) is elastically deflectable outwards to exert a clamping force on the mounted outer cutting tool (20), through which the outer cutting tool (20) is clampable to the tool holder (12), as well as the inner clamp wall (34) is elastically deflectable inwards to exert a clamping force on the mounted inner cutting tool (16), through which the inner cutting tool (16) is clampable to the tool holder, **characterized in that**
the hydraulic chamber (30) has a first hydraulic chamber section (36) formed in a free axial end section (38) of the tool mounting end section (24) of the tool holder (12), formed ring-shaped and encircling the tool rotational axis (14) and defined radially outwards by a first outer peripheral clamp wall section (40) of the outer clamp wall (32) and defined radially inwards by a first inner peripheral clamp wall section (42) of the inner clamp wall (34), so that the clamping force exerted by the first outer peripheral clamp wall section (40) and by the first inner peripheral clamp wall section (42) is transferred radially between the first outer and the first inner peripheral clamp wall section (40, 42) via the hydraulic fluid present in the first hydraulic chamber section, and
**in that** the hydraulic chamber (30) comprises a second, outer hydraulic chamber section (44) formed in a section (46) of the tool mounting end section (24) of the tool holder (12) that is axially adjacent to the free axial end section (38), formed ring-shaped and encircling the tool rotational axis (14) and defined radially outwards by a second outer peripheral clamp wall section (48) of the outer clamp wall (32), and wherein the hydraulic chamber (30) comprises a second, inner hydraulic chamber section (50) formed in the section (46) of the tool mounting end section (24) of the tool holder (12) that is axially adjacent to the free axial end section (38), optionally formed axially level with the second outer hydraulic chamber section (44), formed ring-shaped and encircling the tool rotational axis (14) and defined radially inwards by a second inner peripheral clamp wall section (52) of the inner clamp wall (34), wherein an annular wall (54) of the tool mounting end section (24) extends radially between the second, outer hydraulic chamber section (44) and the second, inner hydraulic chamber section (50), by which the clamping force exerted by the second outer peripheral clamp wall section (48) on the mounted outer cutting tool (20) and the clamping force exerted by the second inner peripheral clamp wall section (52) on the inner cutting tool (16) are counteractable.

9. Tool holder (12) according to claim 8, wherein the radial, elastic flexibility of the second outer peripheral clamp wall section (48) is greater than the radial, elastic flexibility of the first outer peripheral clamp wall section (40), so that based on an equal hydraulic pressure the clamping force exerted by the second outer peripheral clamp wall section (48) is greater than the clamping force exerted by the first outer peripheral clamp wall section (40).

10. Tool holder (12) according to claim 8 or 9, wherein the first outer peripheral clamp wall section (40) has a radial wall thickness (t40) that is greater than the radial wall thickness (t48) of the second outer peripheral clamp wall section (48).

11. Tool holder (12) according to any one of claims 8 to 10, wherein the hydraulic chamber (30) comprises a pressure chamber section (60), which is defined by a movable piston (62) through movement of which the volume of the hydraulic chamber (30) is variable to correspondingly increase and decrease the hydraulic pressure in the hydraulic chamber (30),
wherein optionally the movable piston (62) is constituted by a screw, optionally a set screw, which is screwable into the pressure chamber section (60), and/or
wherein optionally the pressure chamber section (60) is hydraulically connected with the second, inner hydraulic chamber section (50) via a first connection channel (64) and wherein the pressure chamber section (60) is hydraulically connected with the second, outer hydraulic chamber section (44) via a second connection channel (66) differing from the first connection channel (64), and/or
wherein optionally the first hydraulic chamber section (36) is directly hydraulically connected with the second, inner hydraulic chamber section (50) and only indirectly connected with the second, outer hydraulic chamber section (44) via the pressure chamber section (60).

12. Tool holder (12) according to any one of claims 8 to 11, wherein the second, outer hydraulic chamber section (44) extends farther radially outwards than the first hydraulic chamber section (36).

13. Tool holder (12) according to any one of claims 8 to 12, wherein the radial, elastic flexibility of the second outer peripheral clamp wall section (48) is greater than the radial, elastic flexibility of the first outer peripheral clamp wall section (40), so that based on an equal hydraulic pressure the clamping force exerted by the second outer peripheral clamp wall section (48) is greater than the clamping force respectively exerted by the first outer peripheral clamp wall section (40),
wherein optionally the first outer peripheral clamp wall section (40) has a radial wall thickness (t40) that is greater than the radial wall thickness (t48) of the second outer peripheral clamp wall section (48).

14. Tool holder (12) according to any one of claims 8 to 13, wherein the tool holder (12) comprises an axial stop (90; 92) in the tool mounting opening (26), which the mounted inner cutting tool (16) can butt against axially, so that axial displaceability of the inner cutting tool (16) in a direction of the tool mounting opening (26) is limited by the axial stop.

15. Tool holder (12) according to claim 14, wherein the axial stop is designed to be axially adjustable, wherein the axial stop is optionally designed as an axially adjustable screw, optionally as an axially adjustable set screw (90), that is axially screwable in the tool mounting opening (26) of the tool holder (12).

## Revendications

1. Outil combiné (10), comprenant :
- un porte-outil (12) qui s'étend le long d'un axe de rotation d'outil (14) qui définit une extension axiale,
- un outil de coupe intérieur (16) pour usiner une première région de trou centrale (18), et
- un outil de coupe extérieur (20) en forme de manchon pour usiner une deuxième région de trou (22) radialement vers l'extérieur par rapport à la première région de trou,
dans lequel le porte-outil (12) comprend une section d'extrémité de réception d'outil axiale libre (24) qui présente un trou de réception d'outil central (26) pour accueillir l'outil de coupe intérieur et une surface périphérique de réception d'outil (28) entourant le trou de réception d'outil central pour accueillir l'outil de coupe extérieur, de sorte que, lorsque les outils de coupe intérieur et extérieur sont accueillis, la section d'extrémité de réception d'outil (24) s'étend radialement entre les outils de coupe intérieur et extérieur, dans lequel une chambre hydraulique (30) est formée dans la section d'extrémité de réception d'outil, dans laquelle est contenu un fluide hydraulique qui peut être mis de manière variable sous une pression hydraulique, et dans lequel la section d'extrémité de réception d'outil comprend une paroi de serrage extérieure (32) pouvant être déviée de manière élastique radialement vers l'extérieur et une paroi de serrage intérieure (34) pouvant être déviée de manière élastique radialement vers l'intérieur, qui définissent la chambre hydraulique en sections de sorte que par une augmentation de la pression hydraulique dans la chambre hydraulique, la paroi de serrage extérieure (32) peut être déviée de manière élastique vers l'extérieur pour exercer une force de serrage sur l'outil de coupe extérieur accueilli, par laquelle l'outil de coupe extérieur peut être serré sur le porte-outil, ainsi que la paroi de serrage intérieure (34) peut être déviée élastiquement vers l'intérieur pour exercer une force de serrage sur l'outil de coupe intérieur accueilli, par laquelle l'outil de coupe intérieur peut être serré sur le porte-outil,
**caractérisé en ce que** la chambre hydraulique (30) comprend une deuxième section de chambre hydraulique extérieure (44) formée dans une section (46) de la section d'extrémité de réception d'outil (24) du porte-outil (12) qui est axialement adjacente à une section d'extrémité axiale libre (38), et formée en forme d'anneau et entourant l'axe de rotation d'outil (14) et définie radialement vers l'extérieur par une deuxième section de paroi de serrage périphérique extérieure (48) de la paroi de serrage extérieure (32), et **en ce que**
la chambre hydraulique (30) comprend une deuxième section de chambre hydraulique intérieure (50) formée dans la section (46) de la section d'extrémité de réception d'outil (24) du porte-outil (12) qui est axialement adjacente à la section d'extrémité axiale libre (38), éventuellement formée axialement au niveau de la deuxième section de chambre hydraulique extérieure (44), et formée en forme d'anneau et entourant l'axe de rotation d'outil (14) et définie radialement vers l'intérieur par une deuxième section de paroi de serrage périphérique intérieure (52) de la paroi de serrage intérieure (34), dans lequel une paroi annulaire (54) de la section d'extrémité de réception d'outil (24) s'étend radialement entre la deuxième section de chambre hydraulique extérieure (44) et la deuxième section de chambre hydraulique intérieure (50), par laquelle la force de serrage exercée par la deuxième section de paroi de serrage périphérique extérieure (48) sur l'outil de coupe extérieur accueilli (20) et la force de serrage exercée par la deuxième section de paroi de serrage périphérique intérieure (52) sur l'outil de coupe intérieur (16) peuvent être contrecarrées.

2. Outil combiné (10) selon la revendication 1, dans lequel
la chambre hydraulique (30) présente une première section de chambre hydraulique (36) formée dans la section d'extrémité axiale libre (38) de la section d'extrémité de réception d'outil (24) du porte-outil (12), et formée en forme d'anneau et entourant l'axe de rotation d'outil (14) et définie radialement vers l'extérieur par une première section de paroi de serrage périphérique extérieure (40) de la paroi de serrage extérieure (32) et définie radialement vers l'intérieur par une première section de paroi de serrage périphérique intérieure (42) de la paroi de serrage intérieure (34), de sorte que la force de serrage exercée par la première section de paroi de serrage périphérique extérieure (40) et par la première section de paroi de serrage périphérique intérieure (42) est transférée radialement entre la première section de paroi de serrage périphérique extérieure et la première section de paroi de serrage périphérique intérieure via le fluide hydraulique présent dans la première section de chambre hydraulique, dans lequel, éventuellement, la flexibilité élastique radiale de la deuxième section de paroi de serrage périphérique extérieure (48) est supérieure à la flexibilité élastique radiale de la première section de paroi de serrage périphérique extérieure (40), de sorte que, sur la base d'une pression hydraulique égale, la force de serrage exercée par la deuxième section de paroi de serrage périphérique extérieure (48) est supérieure à la force de serrage exercée par la première section de paroi de serrage périphérique extérieure (40), dans lequel, par exemple, la première section de paroi de serrage périphérique extérieure (40) a une épaisseur de paroi radiale (t40) qui est supérieure à l'épaisseur de paroi radiale (t48) de la deuxième section de paroi de serrage périphérique extérieure (48).

3. Outil combiné (10) selon l'une quelconque des revendications 1 à 2, dans lequel la chambre hydraulique (30) comprend une section de chambre de pression (60), qui est définie par un piston mobile (62) par le mouvement duquel le volume de la chambre hydraulique (30) est variable pour augmenter et diminuer de manière correspondante la pression hydraulique dans la chambre hydraulique (30),
dans lequel, en option, le piston mobile (62) est constitué par une vis, en option une vis de réglage, qui peut être vissée dans la section de chambre de pression (60), et/ou dans lequel, en option, la section de chambre de pression (60) est reliée hydrauliquement à la deuxième section de chambre hydraulique intérieure (50) par l'intermédiaire d'un premier canal de liaison (64), et
dans lequel la section de chambre de pression (60) est reliée hydrauliquement à la deuxième section de chambre hydraulique extérieure (44) par un deuxième canal de liaison (66) différent du premier canal de liaison (64), et/ou,
aussi longtemps qu'en combinaison avec la revendication 2, dans lequel, en option, la première section de chambre hydraulique (36) est directement reliée hydrauliquement à la deuxième section de chambre hydraulique intérieure (50) et seulement indirectement reliée à la deuxième section de chambre hydraulique extérieure (44) via la section de chambre de pression (60).

4. Outil combiné (10) selon l'une quelconque des revendications précédentes, tant qu'il est en combinaison avec la revendication 2, dans lequel la deuxième section de chambre hydraulique extérieure (44) s'étend plus loin radialement vers l'extérieur que la première section de chambre hydraulique (36), et/ou dans lequel l'outil de coupe extérieur (20) est muni d'un certain nombre d'arêtes de coupe (70) qui, lorsque l'outil de coupe extérieur (20) est accueilli, sont disposées axialement au niveau de la première section de chambre hydraulique (36).

5. Outil combiné (10) selon l'une quelconque des revendications précédentes, dans lequel l'outil de coupe extérieur (20), s'il est accueilli par le porte-outil (12), est exempt d'arêtes de coupe à un niveau axial de la deuxième section de chambre hydraulique extérieure (44), et/ou
dans lequel l'outil de coupe extérieur (20) est pourvu d'une saillie axiale (80) ou d'un évidement axial et dans lequel le porte-outil (12) est pourvu d'un évidement axial (82) pour un engagement par ajustement de forme avec la saillie axiale de l'outil de coupe extérieur accueilli ou avec une saillie axiale pour un engagement par ajustement de forme avec l'évidement axial de l'outil de coupe extérieur accueilli (20), pour au moins assister le transfert de couple autour de l'axe de rotation d'outil du porte-outil (12) à l'outil de coupe extérieur (20), et/ou
aussi longtemps qu'en combinaison avec la revendication 2, dans lequel l'épaisseur radiale de la première chambre hydraulique (30) est supérieure à l'épaisseur radiale de la deuxième chambre hydraulique extérieure (44) et/ou à l'épaisseur radiale de la deuxième chambre hydraulique intérieure (50), et/ou
dans lequel le porte-outil (12) comprend une butée axiale (90 ; 92) dans le trou de réception d'outil (26), contre laquelle l'outil de coupe intérieur accueilli (16) peut buter axialement, de sorte que la capacité de déplacement axial de l'outil de coupe intérieur (16) dans une direction du trou de réception d'outil est limitée par la butée axiale, la butée axiale étant par exemple réalisée de manière à être réglable axialement, la butée axiale étant réalisée en option sous la forme d'une vis réglable axialement, en option sous la forme d'une vis de réglage (90) réglable axialement, qui peut être vissée axialement dans le trou de réception d'outil (26) du porte-outil (12).

6. Utilisation d'un outil combiné (10) selon l'une quelconque des revendications 1-5 pour l'usinage, éventuellement pour l'usinage simultané, d'un trou central (122) pour la réception d'une douille de guidage de soupape (124) et d'un évidement (126) coaxial et radialement extérieur à celui-ci pour le réception d'une bague de siège de soupape (128) dans une tête de cylindre (120).

7. Utilisation d'un outil combiné (10) selon l'une quelconque des revendications 1-5 pour l'usinage, éventuellement pour l'usinage simultané, d'une douille de guidage de soupape (124) et d'une bague de siège de soupape (128) dans une tête de cylindre (120).

8. Porte-outil (12) pour un outil combiné (10) selon l'une quelconque des revendications précédentes aussi longtemps qu'il est en combinaison avec la revendication 2, dans lequel le porte-outil (12) s'étend le long d'un axe de rotation d'outil (14) qui définit une extension axiale et le porte-outil (12) comprend une section d'extrémité axiale libre de réception d'outil (24) qui a un trou central centrale de réception d'outil (26) pour accueillir un outil de coupe intérieur (16) et une surface périphérique de réception d'outil (28) entourant le trou central de réception d'outil (26) pour accueillir un outil de coupe extérieur (20), de sorte que lorsque les outils de coupe intérieur et extérieur (16, 20) sont accueillis, la section d'extrémité de réception d'outil (24) s'étend radialement entre les outils de coupe intérieur et extérieur (16, 20), dans lequel une chambre hydraulique (30) est formée dans la section d'extrémité de réception d'outil (24), dans laquelle est contenu un fluide hydraulique qui peut être mis de manière variable sous une pression hydraulique, et dans lequel la section d'extrémité de réception d'outil (24) comprend une paroi de serrage extérieure (32) pouvant être déviée de manière élastique radialement vers l'extérieur et une paroi de serrage intérieure (34) pouvant être déviée de manière élastique radialement vers l'intérieur, qui définissent la chambre hydraulique (30) en sections de sorte que, par une augmentation de la pression hydraulique dans la chambre hydraulique (30), la paroi de serrage extérieure (32) peut être déviée de manière élastique vers l'extérieur pour exercer une force de serrage sur l'outil de coupe extérieur accueilli (20), par laquelle l'outil de coupe extérieur (20) peut être serré sur le porte-outil (12), ainsi que la paroi de serrage intérieure (34) peut être déviée élastiquement vers l'intérieur pour exercer une force de serrage sur l'outil de coupe intérieur (16) accueilli, par laquelle l'outil de coupe intérieur (16) peut être serré sur le porte-outil, **caractérisé en ce que**
la chambre hydraulique (30) présente une première section de chambre hydraulique (36) formée dans une section d'extrémité axiale libre (38) de la section d'extrémité de réception d'outil (24) du porte-outil (12), et formée en forme d'anneau et entourant l'axe de rotation d'outil (14) et définie radialement vers l'extérieur par une première section de paroi de serrage périphérique extérieure (40) de la paroi de serrage extérieure (32) et définie radialement vers l'intérieur par une première section de paroi de serrage périphérique intérieure (42) de la paroi de serrage intérieure (34), de sorte que la force de serrage exercée par la première section de paroi de serrage périphérique extérieure (40) et par la première section de paroi de serrage périphérique intérieure (42) est transférée radialement entre la première section de paroi de serrage périphérique extérieure et la première section de paroi de serrage périphérique intérieure (40, 42) via le fluide hydraulique présent dans la première section de chambre hydraulique, et
**en ce que** la chambre hydraulique (30) comprend une deuxième section de chambre hydraulique extérieure (44) formée dans une section (46) de la section d'extrémité de réception d'outil (24) du porte-outil (12) qui est axialement adjacente à la section d'extrémité axiale libre (38), et formée en forme d'anneau et entourant l'axe de rotation d'outil (14) et définie radialement vers l'extérieur par une deuxième section de paroi de serrage périphérique extérieure (48) de la paroi de serrage extérieure (32), et dans lequel la chambre hydraulique (30) comprend une deuxième section de chambre hydraulique intérieure (50) formée dans la section (46) de la section d'extrémité de réception d'outil (24) du porte-outil (12) qui est axialement adjacente à la section d'extrémité axiale libre (38), optionnellement formée axialement au niveau de la deuxième section de chambre hydraulique extérieure (44), et formée en forme d'anneau et entourant l'axe de rotation d'outil (14) et définie radialement vers l'intérieur par une deuxième section de paroi de serrage périphérique intérieure (52) de la paroi de serrage intérieure (34), dans lequel une paroi annulaire (54) de la section d'extrémité de réception d'outil (24) s'étend radialement entre la deuxième section de chambre hydraulique extérieure (44) et la deuxième section de chambre hydraulique intérieure (50), par laquelle la force de serrage exercée par la deuxième section de paroi de serrage périphérique extérieure (48) sur l'outil de coupe extérieur accueilli (20) et la force de serrage exercée par la deuxième section de paroi de serrage périphérique intérieure (52) sur l'outil de coupe intérieur (16) peuvent être contrecarrées.

9. Porte-outil (12) selon la revendication 8, dans lequel la flexibilité élastique radiale de la deuxième section de paroi de serrage périphérique extérieure (48) est supérieure à la flexibilité élastique radiale de la première section de paroi de serrage périphérique extérieure (40), de sorte que sur la base d'une pression hydraulique égale, la force de serrage exercée par la deuxième section de paroi de serrage périphérique extérieure (48) est supérieure à la force de serrage exercée par la première section de paroi de serrage périphérique extérieure (40).

10. Porte-outil (12) selon la revendication 8 ou 9, dans lequel la première section de paroi de serrage périphérique extérieure (40) a une épaisseur de paroi radiale (t40) qui est supérieure à l'épaisseur de paroi radiale (t48) de la deuxième section de paroi de serrage périphérique extérieure (48) .

11. Porte-outil (12) selon l'une quelconque des revendications 8 à 10, dans lequel la chambre hydraulique (30) comprend une section de chambre de pression (60), qui est définie par un piston mobile (62) par le mouvement duquel le volume de la chambre hydraulique (30) est variable pour augmenter et diminuer de manière correspondante la pression hydraulique dans la chambre hydraulique (30),
dans lequel le piston mobile (62) est éventuellement constitué par une vis, éventuellement une vis de réglage, qui peut être vissée dans la section de chambre de pression (60), et/ou
dans lequel, en option, la section de chambre de pression (60) est reliée hydrauliquement à la deuxième section de chambre hydraulique intérieure (50) par un premier canal de liaison (64) et dans lequel la section de chambre de pression (60) est reliée hydrauliquement à la deuxième section de chambre hydraulique extérieure (44) par un deuxième canal de liaison (66) différent du premier canal de liaison (64), et/ou
dans lequel, en option, la première section de chambre hydraulique (36) est directement reliée hydrauliquement à la deuxième section de chambre hydraulique intérieure (50) et seulement indirectement reliée à la deuxième section de chambre hydraulique extérieure (44) par l'intermédiaire de la section de chambre de pression (60).

12. Porte-outil (12) selon l'une quelconque des revendications 8 à 11, dans lequel la deuxième section de chambre hydraulique extérieure (44) s'étend plus loin radialement vers l'extérieur que la première section de chambre hydraulique (36).

13. Porte-outil (12) selon l'une quelconque des revendications 8 à 12, dans lequel la flexibilité élastique radiale de la deuxième section de paroi de serrage périphérique extérieure (48) est supérieure à la flexibilité élastique radiale de la première section de paroi de serrage périphérique extérieure (40), de sorte que, sur la base d'une pression hydraulique égale, la force de serrage exercée par la deuxième section de paroi de serrage périphérique extérieure (48) est supérieure à la force de serrage exercée respectivement par la première section de paroi de serrage périphérique extérieure (40),
dans lequel, en option, la première section de paroi de serrage périphérique extérieure (40) a une épaisseur de paroi radiale (t40) qui est supérieure à l'épaisseur de paroi radiale (t48) de la deuxième section de paroi de serrage périphérique extérieure (48).

14. Porte-outil (12) selon l'une quelconque des revendications 8 à 13, dans lequel le porte-outil (12) comprend une butée axiale (90 ; 92) dans le trou de réception d'outil (26), contre laquelle l'outil de coupe intérieur accueilli (16) peut buter axialement, de sorte qu'une capacité de déplacement axial de l'outil de coupe intérieur (16) dans une direction du trou de réception d'outil (26) est limitée par la butée axiale.

15. Porte-outil (12) selon la revendication 14, dans lequel la butée axiale est conçue pour être réglable axialement, dans lequel la butée axiale est conçue en option comme une vis réglable axialement, en option comme une vis de réglage (90) réglable axialement, qui peut être vissée axialement dans le trou de réception d'outil (26) du porte-outil (12).
